# EUROPEAN PATENT SPECIFICATION

(11) **EP 2 296 849 B1**
(45) Date of publication and mention of the grant of the patent: **01.09.2021**
(21) Application number: 09773830.6
(22) Date of filing: 03.07.2009
(51) Int. Cl.: B25F 5/00, F16D 25/04, F16D 25/06

(54) **A DEVICE FOR CONTROLLING AN ACTUATING MOTION OF AN ACTUATOR AND AN ACTUATOR COMPRISING THE DEVICE**
VORRICHTUNG ZUR STEUERUNG EINER BETÄTIGUNGSBEWEGUNG EINES AKTUATORS UND EIN AKTUATOR MIT DER VORRICHTUNG
DISPOSITIF POUR COMMANDER UN MOUVEMENT D'ACTIONNEMENT D'UN ACTIONNEUR ET ACTIONNEUR COMPORTANT LE DISPOSITIF

(30) Priority: 04.07.2008 SE 0801610
(43) Date of publication of application: 23.03.2011
(73) Proprietor: Ewellix AB, 41552 Göteborg (SE)
(72) Inventor: EMBRETZEN, Magnus, S-435 40 Mölnlycke (SE)
(74) Representative: Heyerhoff Geiger & Partner Patentanwälte PartGmbB
(86) International application number: PCT/SE2009/000356
(87) International publication number: WO 2010/002315

(56) References cited:
- DE-A1- 3 326 591
- DE-A1- 19 636 710
- GB-A- 2 102 910
- US-A- 2 660 026
- US-A- 3 163 274

## Description

### TECHNICAL FIELD

The present invention relates to a system comprising an actuator and a device for controlling an actuating motion of said actuator.

### BACKGROUND

In the field of actuators, there is a need to control the actuating motion. For instance, there is a need to lock the actuating motion and to brake the actuating motion. However, there is also a need of releasing a brake, or a lock, such that the actuating motion is no longer locked, or braked. For instance, in case of emergencies, there may be a need to either lock, or brake, or release an actuating motion of an actuator from a locked or braked state.

GB 2 102 910 A relates to means for preventing damage to machines due to overloads and refers more particularly to automatic means to safeguard lead screw driven machines from excessive overloads that occur when machine motion is obstructed.

US 2,660,026 A relates to actuators and more particularly to actuators adapted to be operated by two separate motivating means.

### SUMMARY OF INVENTION

The present invention solves the problem of controlling an actuating motion of an actuator between two states;
1) from a locked, or braked state, (i.e. releasing from a locked/braked state) and
2) to a locked, or braked state (i.e. locking/braking from a free state).

According to the invention, the actuator has a nut, a screw, and an electric motor for driving the nut and the screw, a rotatable part, wherein a rotation of the rotatable part is related to the actuating motion. The term diving the nut and screw implies that when one of the nut and the screw is rotated, this leads to an extension or contraction of the actuator. This is a well known use of an actuator. That the rotation of the rotatable part is related to the actuating motion means that if the actuator is performing an actuating motion, this implies that also the rotatable part rotates. Also, if there is no on going actuating motion the there is no rotation of the rotatable part. The actuator is of a non self locking type. The device comprises a braking part for decreasing the rotation of the rotatable part, and a pressure chamber, having a member, said member being resilient. The function of the braking part is to decrease the rotation. In an embodiment the braking part decreases the rotation to zero, i.e. the braking part has a locking effect of the actuator.

The member is movable in an inward or an outward direction in relation to the pressure chamber. As a consequence of a pressure change in the pressure chamber, the pressure change leads to a movement of the member, causing a movement of the braking part in relation to the rotatable part, such that, when they come in contact, the rotation of the rotatable part is decreased, leading to decreasing the actuating motion of the actuator. Thus, when there is a pressure change in the pressure chamber, this leads to a movement of the member, which in turn causes a movement of the braking part in relation to the rotatable part, in the way that they come into contact with each other and consequently the rotation is decreased. Once in contact, there will, in one embodiment, be friction contact between the braking part and the rotatable part. This will decrease the rotation of the rotatable part. This leads to controlling the actuating motion of the actuator. The pressure change is caused by a compressor, and a pressure control unit or a valve. The function of the compressor is to assure a predetermined pressure in the pressure chamber. The function of the pressure control unit is to maintain, increase, or decrease a pressure inside the pressure chamber. The function of the valve is to decrease the pressure in the pressure chamber. The function of the device is based on pressure changes in the pressure chamber. More specifically, a change of the pressure in the pressure chamber leads to that the member moves and causes the braking part to move. In case of an increased pressure in the pressure chamber, this leads to that the braking part is moved closer to the rotatable part. In case of a pressure decrease in the pressure chamber, this leads to that the distance between the braking part and the rotatable part is increased. This offers the advantage of having an opportunity to control the actuating motion of the actuator in terms of locking/braking and releasing the actuator from a locked or braked state.

Actuating motion is a relative movement between the nut and the screw of the actuator.

In an embodiment, the braking part is-fixed to the member. In an embodiment, the braking part is made integral with the member.

In an embodiment, a pressure decrease in the pressure chamber leads to a movement of the member in the inward direction leading to a release of the braking part , allowing a free rotary movement between the nut and the screw. This offers the advantage of being able to have an emergency release function of an actuator.

In an embodiment, a pressure increase in the pressure chamber leads to a movement of the member in the outward direction such that a contact between the braking part and the rotatable part is established, leading to a braking, or locking, of the actuating motion of the actuator. This offers the advantage of being able to have an emergency braking/locking function of an actuator. This offers the advantage that it is possible not only to stop the rotatable part but also to slow down its rotating speed and thereby slow down the actuating motion of the actuator.

In an embodiment, the device further comprises means for controlling the distance and/or pressure between the rotatable part and the braking part . In an embodiment, the means is at least one of a resilient means, a spring, or a magnetic coil. The means offers the advantage of maintaining a suitable distance, or pressure, between the rotatable part and the braking part . In the case of a magnetic coil, the magnetic coil is driven by electricity. Thus this offers the advantage of controlling the actuation motion of an actuator with two sources of energy; pneumatics and electricity.

In an embodiment, the member (driven by the pressure difference between the inside of the pressure chamber and its outside) and the means for controlling the distance and/or pressure between the rotatable part and the braking part (in the case of the magnetic coil, the means is driven by electricity). This offers an opportunity of having double systems for driving the actuating motion of the actuator (i.e. the pressure difference and electricity). This offers the opportunity that one functions as a support to the other. Alternatively, these double systems may be used to balance each other such that the member and the means work, at least partly, in opposite directions.

In an embodiment, the device further comprises the electric motor having a rotary shaft, the rotary shaft being connected to the rotatable part, or alternatively, the rotary shaft is connected to the screw.

In an embodiment, the rotatable part is connected to the screw, possible via a gear.

In an embodiment, the member is a membrane.

In an embodiment, wherein the pressure chamber is pressurized by a pneumatic compressor.

In an embodiment, at least one of the rotatable part or the braking part is a component of at least one of a lock or a brake.

### BRIEF DESCRIPTION OF DRAWINGS

In Figure 1A an schematic illustration of an embodiment according to the invention is given. Figure 1B shows an embodiment not forming part of the present invention.

In Figures 2A, 2B, and 2C, schematic illustrations of embodiments of how the device for controlling an actuating motion may be located in relation to an actuator, according to the first aspect of the present invention are given.

In Figures 3A and 3B, schematic illustrations of embodiments of supporting the movement of the member, according to the first aspect of the present invention are given.

In Figure 4, a schematic illustration of an embodiment of the device according to the first aspect, in which the device presents a combination of one or more springs and one or more magnetic coils.

### DESCRIPTION OF PREFERRED EMBODIMENTS

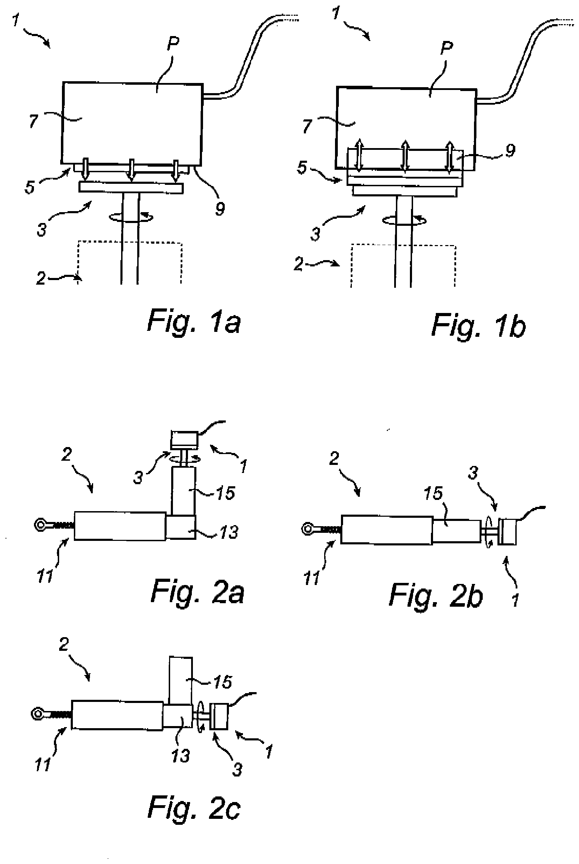

In Figures 1A and 1B, schematic illustrations of embodiments according to the first aspect of the present invention are given. Devices 1 for controlling an actuating motion of an actuator 2 are showed therein. Besides components of an actuator 2 well known to the person skilled in the art, there is a rotatable part 3, a rotation of which is related to the actuating motion (i.e. the relative movement between a screw and a nut). The device 1 comprises a braking part 5 for decreasing the rotation of the rotatable part 3. The rotatable part 3 may be a screw of an actuator 2, or a rotary shaft of a motor for driving the actuator 2. Alternatively, the rotatatable part 3 is a part that has been mounted onto to the screw or the shaft of the motor. The braking part 5 and/or the rotatable part 3 have locking means or braking means such that a relative rotation between them may be blocked, or released. The locking means or braking means may be based on friction or that the rotatable part 3 and the braking part 5 have matching surfaces that when in contact accomplishes a locking or a braking function. In the case of friction, at least one of the rotatable part 3 and the braking part 5 may be equipped with pads providing a suitable friction between them. The device 1 further comprises a pressure chamber 7, which has a member 9. The member 9 is movable (either as a whole or a part thereof) in an inward or an outward direction in relation to the pressure chamber 7. A as a consequence of a pressure change in the pressure chamber 7, the pressure change leads to a movement of the member 9, causing a movement of the braking part 5 in relation to the rotatable part 3, such that, when they come in contact, the rotation of the rotatable part 3 is decreased, leading to decreasing the actuating motion of the actuator 2. Thus, the movement of the member 9 causes a movement of the braking part 5 in relation to the rotatable part 3 such that there will either be a contact (braking or locking), or lack of contact (releasing) the rotatable part. This leads to controlling the actuating motion of the actuator 2.

The device 1 according to the first aspect operates an actuating motion of an actuator 2 between two states;
1) from a locked, or braked state, (i.e. releasing from a locked/braked state) and
2) to a locked, or braked state (i.e. locking/braking from a free state).

In an embodiment, a pressure decrease in the pressure chamber 7 leads to a movement of the member 9 in the inward direction leading to a release of the braking part 5, allowing a free rotary movement between the nut and the screw of the actuator 2. This is accomplished as a consequence of the rotatable part 3 being released from the braking part 5.

According to the invention, the member 9 is resilient such that it may resiliently bulge in, as a consequence of a pressure decrease, and accomplish the breaking up of, or at least partly diminishing, a contact between the rotatable part 3 and the braking part 5.

In an embodiment, a pressure increase in the pressure chamber 7 leads to a movement of the member 9 in the outward direction such that a contact between the braking part 5 and the rotatable part 3 is established, leading to a braking, or locking, of the actuating motion of the actuator 2. This is accomplished as a consequence of that the rotatable part 3 and the braking part 5 come in contact with each other.

According to the invention, the member 9 is resilient such that it may resiliently bulge out, as a consequence of a pressure increase, and accomplish the desired contact between the rotatable part 3 and the braking part 5.

In an embodiment, the member is a membrane, as shown in Figure 1A.

In an embodiment not forming part of the invention, the member is a plunger that, as a consequence of either a pressure increase or a pressure decrease, moves in the outward or inward direction. In an embodiment, the plunger is sealed with a sealing. This is shown in Figure 1B.

In Figures 2A, 2B, and 2C, alternatives of how the device 1 according to the first invention may be mounted in relation to an actuator 2.

In Figure 2A, an embodiment of an actuator 2 is schematically shown, that has a nut and screw arrangement 11, a gear 13, and a motor 15 for driving the actuator 2. The device 1 for controlling the actuating motion is fixed to a rotary shaft of the motor 15.

In Figure 2B, an embodiment of a device 1 for controlling an actuating motion is fixed to a shaft of the gear 13.

In Figure 2C, an embodiment of a device 1 without a gear is shown. In Figure 2C, the device 1 for controlling an actuating motion is fixed to the shaft of the motor 15.

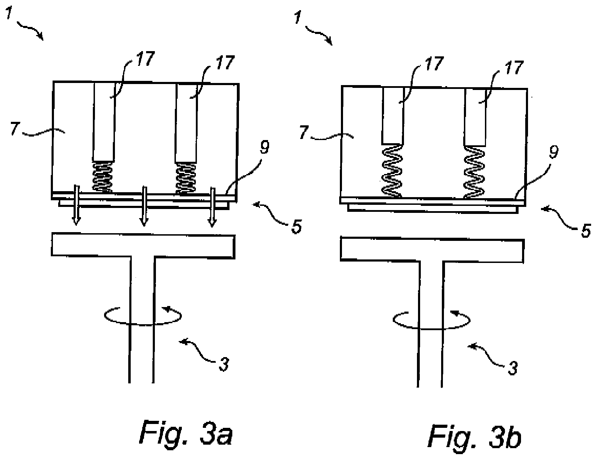

In Figures 3A and 3B, embodiments of the device 1 for controlling an actuating motion are given, in which they further comprise means 17 for controlling the distance and/or pressure between the rotatable part 3 and the braking part 5. In embodiments, the means 17 is at least one of a resilient means, a spring, or a magnetic coil.

In Figure 3A, one or more springs 17 have been included to the device 1 for controlling an actuating motion. The function of a spring 17 is to support the member 9 in its movements. Alternatively, the function of the one or more springs 17 is to balance the relative movement and/or pressure between the rotatable part 3 and the braking part 5, e.g. the one or more springs 17 work against the moving direction of the member 9. In general, the location of the one or more springs 17 may be on either side of the member 9. In Figure 3A, the one or more springs 17 are "above" the member. Alternatively, the one or more springs 17 may be "below" the member 9 in the Figure. One movement is the release of the actuator 2 from a locked/braked state (in the case of a pressure decrease) by which the spring 17 will assist in forcing the member 9, and the braking part 5, to leave the rotatable part 3. Another movement is the braking/locking of the actuator 2 (in case of a pressure increase), by which the spring 17 will assist in forcing, or balancing the member 9, and the braking part 5, to contact the rotatable part 3 and thus accomplishing a braking/locking function. In Figure 3A, the illustration is limited to the membrane function in view of the member 9. However, it is equally applicable to the plunger function.

In Figure 3B, one or more magnetic coils 17 have been included to the device 1 for controlling an actuating motion. The function of a magnetic coil 17 is to support the member 9 in its movements. Alternatively, the function of the one or more magnetic coils 17 is to balance the relative movement between the rotatable part 3 and the braking part 5, i.e. the one or more magnetic coils 17 work against the moving direction of the member 9. In general, the location of the one or more magnetic coils 17 may be on either side of the member 9. In Figure 3B, the one or more magnetic coils 17 are "above" the member 9. Alternatively, the one or more magnetic coils 17 may be "below" the member 9. One movement is the release of the actuator 2 from a locked/braked state (in the case of a pressure decrease) by which the magnetic coil 17 will assist in forcing the member 9, and the braking part 5, to leave the rotatable part 3. This is accomplished by applying a suitable current through the magnetic coil 17. Another movement is the braking/locking of the actuator 2 (in case of a pressure increase), by which the spring 17 will assist in forcing the member 9, and the braking part 5, to contact the rotatable part 3 and thus accomplishing a braking/locking function. In Figure 3B, the illustration is limited to the membrane function in view of the member 9. However, it is equally applicable to the plunger function.

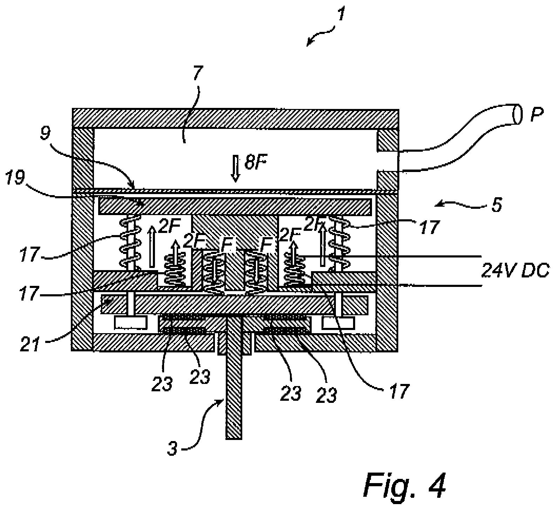

In Figure 4, a schematic illustration of an embodiment of the device 1 according to the first aspect, in which the device 1 presents a combination of one or more springs 17 and one or more magnetic coils 17. Also shown in Figure 4 is the force balance (indicated by 'F', '2F's, '8F') between the member 9, the one or more springs 17 and the one or more magnetic coils 17. In Figure 4, there is a spring 17 to lock the brake. There is also a pressure chamber 7 in which it is possible to change the pressure in order to accommodate a movement of the member 9. In Figure 4, there is also a release unit 19 that releases the device 1. A spring 17 controls the release unit. When the pressure in the pressure chamber 7 changes the member 9 will change its position accordingly and the spring 17 will expand, or contract, (depending on whether there is a pressure increase or decrease). The movement of the release unit 19 (caused by a change in the force balance between the member 9 and the spring 17) will lift (in case of a pressure decrease in the pressure chamber 7) a brake plate 21 so that a brake pad 23 will be released and thus the motor shaft is free. In an embodiment, one or more magnetic coils 17, which are electrically driven, are included to assist in moving the release unit 19/the member 9. This offers the advantage of having a back up power source, as a complement to pressure for operating the device. Thus, it lies within the scope of the present invention to combine one or more springs 17 and one or more magnetic coils 17 with the device 1 for accomplishing an actuating motion.

In an embodiment, the pressure chamber 7 is pressurized by a pneumatic compressor.

## Claims

1. System comprising an actuator (2) and a device (1) for controlling an actuating motion of said actuator (2),
the actuator (2) having a nut, a screw, and an electric motor (15) for driving the nut and the screw, a rotatable part (3), wherein a rotation of the rotatable part (3) is related to the actuating motion, the actuator (2) being non self locking,
the device (1) comprising:
- a braking part (5) for decreasing the rotation of the rotatable part (3),
- a pressure chamber (7), having a member (9),
- the member (9) is movable in an inward or an outward direction in relation to the pressure chamber (7), wherein as a consequence of a pressure change in the pressure chamber (7), the pressure change leads to a movement of the member (9), causing a movement of the braking part (5) in relation to the rotatable part (3), such that, when they come in contact, the rotation of the rotatable part (3) is decreased, leading to decreasing the actuating motion of the actuator (2), **characterised in that** the member (9) is resilient.

2. System according to claim 1, wherein a pressure decrease in the pressure chamber (7) leads to a movement of the member (9) in the inward direction leading to a release of the braking part (5), allowing a free rotary movement between the nut and the screw.

3. System according to claim 1, wherein a pressure increase in the pressure chamber (7) leads to a movement of the member (9) in the outward direction such that a contact between the braking part (5) and the rotatable part (3) is established, leading to a braking, or locking, of the actuating motion of the actuator (2).

4. System according to any one of the previous claims, further comprising means (17) for controlling the distance and/or pressure between the rotatable part (3) and the braking part (5).

5. System according to any one of the previous claims, wherein the means (17) for controlling the distance and/or pressure is at least one of a resilient means, a spring, or a magnetic coil.

6. System according to claim 1, further comprising the electric motor (15) having a rotary shaft, the rotary shaft being connected to the rotatable part (3).

7. System according to claim 1, wherein the rotatable part (3) is connected to the screw.

8. System according to claim 1, wherein the member (9) is a membrane.

9. System according to claim 1, wherein the braking part (5) is fixed to the member (9).

10. System according to claim 1, wherein the braking part (5) is made integral with the member (9).

11. System according to claims 1-10, wherein at least one of the rotatable part (3) or the braking part (5) is a component of at least one of a lock or a brake.

## Patentansprüche

1. System umfassend einen Aktuator (2) und eine Vorrichtung (1) zur Steuerung einer Betätigungsbewegung des genannten Aktuators,
wobei der Aktuator (2) aufweist eine Schraubenmutter, eine Schraube, und einen elektrischen Motor (15) zum Antrieb der Schraubenmutter und der Schraube, ein rotierbares Teil (3), wobei eine Rotation des rotierbaren Teils (3) mit der Betätigungsbewegung verknüpft ist, wobei der Aktuator (2) nicht selbsthemmend ist,
die Vorrichtung (1) umfasst:
- ein Bremsteil (5) zur Verringerung der Rotation des rotierbaren Teils (3),
- eine Druckkammer (7) aufweisend ein Element (9),
- das Element (9) ist bewegbar in eine Einwärts- oder eine Auswärtsrichtung in Bezug auf die Druckkammer (7), wobei aufgrund einer Druckänderung in der Druckkammer (7) die Druckänderung zu einer Bewegung des Elements (9) führt, welche eine Bewegung des Bremsteils (5) in Bezug auf das rotierbare Teil (3) derart bewirkt, dass sobald diese in Kontakt kommen, die Rotation des rotierbaren Teils (3) verringert wird, was zu einer Verringerung der Betätigungsbewegung des Aktuators (2) führt,
**dadurch gekennzeichnet, dass**
das Element (9) elastisch ist.

2. System gemäß Anspruch 1, wobei ein Rückgang des Drucks in der Druckkammer (7) zu einer Bewegung des Elements (9) in die Einwärtsrichtung führt, die zu einem lösen des Bremsteils (5) führt, was eine freie Rotationsbewegung zwischen der Schraubenmutter und der Schraube erlaubt.

3. System gemäß Anspruch 1, wobei eine Druckerhöhung in der Druckkammer (7) zu einer Bewegung des Elements (9) in die Auswärtsrichtung führt, so dass ein Kontakt zwischen der Bremsvorrichtung (5) und dem rotierbaren Teil (3) hergestellt wird, was zu einem Bremsen oder einem Blockieren der Betätigungsbewegung des Aktuators (2) führt.

4. System gemäß einem der vorhergehenden Ansprüche, ferner umfassend ein Mittel (17) zur Steuerung der Distanz und/oder des Drucks zwischen dem rotierbaren Teil (3) und dem Bremsteil (5).

5. System gemäß einem der vorhergehenden Ansprüche, wobei das Mittel (17) zur Steuerung der Distanz und/oder des Drucks wenigstens ein Element aus der Gruppe ist, welche gebildet ist aus einem elastischen Mittel, einer Feder und einer magnetischen Spule.

6. System gemäß Anspruch 1, ferner umfassend den elektrischen Motor (15), welcher eine Rotorwelle aufweist, wobei die Rotorwelle mit dem rotierbaren Teil (3) verbunden ist.

7. System gemäß Anspruch 1, wobei das rotierbare Teil (3) mit der Schraube verbunden ist.

8. System gemäß Anspruch 1, wobei das Element (9) eine Membran ist.

9. System gemäß Anspruch 1, wobei die Bremsvorrichtung (5) an dem Element (9) fixiert ist.

10. System gemäß Anspruch 1, wobei die Bremsvorrichtung (5) mit dem Element (9) einstückig ausgeführt ist.

11. System gemäß den Ansprüchen 1 - 10, wobei wenigstens ein Element der Gruppe, gebildet aus dem rotierbaren Teil (3) und der Bremsvorrichtung (5), ein Bestandteil von wenigstens einem Element der weiteren Gruppe, gebildet aus einer Arretierung und einer Bremse, ist.

## Revendications

1. Système comprenant un actionneur (2) et un dispositif (1) pour commander un mouvement d'actionnement dudit actionneur (2), l'actionneur (2) ayant un écrou, une vis, et un moteur électrique (15) pour entraîner l'écrou et la vis, une partie rotative (3), dans lequel une rotation de la partie rotative (3) est liée au mouvement d'actionnement, l'actionneur (2) n'étant pas autoverrouillable,
le dispositif (1) comprenant :
- une partie de freinage (5) pour diminuer la rotation de la partie rotative (3),
- une chambre de pression (7) ayant un élément (9),
- l'élément (9) pouvant être déplacé vers l'intérieur ou vers l'extérieur par rapport à la chambre de pression (7), dans lequel suite à un changement de pression dans la chambre de pression (7), le changement de pression entraîne un mouvement de l'élément (9), entraînant un mouvement de la partie de freinage (5) par rapport à la partie rotative (3), de telle sorte que, lorsqu'elles entrent en contact, la rotation de la partie rotative (3) est diminuée, entraînant la diminution du mouvement d'actionnement de l'actionneur (2), **caractérisé en ce que** l'élément (9) est élastique.

2. Système selon la revendication 1, dans lequel une diminution de pression dans la chambre de pression (7) entraîne un mouvement de l'élément (9) vers l'intérieur, entraînant une libération de la partie de freinage (5), permettant un mouvement rotatif libre entre l'écrou et la vis.

3. Système selon la revendication 1, dans lequel une augmentation de pression dans la chambre de pression (7) entraîne un mouvement de l'élément (9) vers l'extérieur de telle sorte qu'un contact entre la partie de freinage (5) et la partie rotative (3) est établi, entraînant un freinage, ou un verrouillage, du mouvement d'actionnement de l'actionneur (2).

4. Système selon l'une quelconque des revendications précédentes, comprenant en outre un moyen (17) pour commander la distance et/ou la pression entre la partie rotative (3) et la partie de freinage (5).

5. Système selon l'une quelconque des revendications précédentes, dans lequel le moyen (17) pour commander la distance et/ou la pression est au moins l'un d'un moyen élastique, d'un ressort, et d'une bobine magnétique.

6. Système selon la revendication 1, comprenant en outre le moteur électrique (15) ayant un arbre rotatif, l'arbre rotatif étant relié à la partie rotative (3).

7. Système selon la revendication 1, dans lequel la partie rotative (3) est reliée à la vis.

8. Système selon la revendication 1, dans lequel l'élément (9) est une membrane.

9. Système selon la revendication 1, dans lequel la partie de freinage (5) est fixée à l'élément (9).

10. Système selon la revendication 1, dans lequel la partie de freinage (5) est réalisée d'un seul tenant avec l'élément (9).

11. Système selon les revendications 1 à 10, dans lequel au moins l'une de la partie rotative (3) ou de la partie de freinage (5) est un composant d'au moins l'un d'un verrou et d'un frein.
